# NEW EUROPEAN PATENT SPECIFICATION

(11) **EP 1 933 500 B2**
(45) Date of publication and mention of the opposition decision: **14.09.2016**
(45) Mention of the grant of the patent: 09.01.2013
(21) Application number: 06791102.4
(22) Date of filing: 25.09.2006
(51) Int. Cl.: H04L 12/54, H04W 28/12, H04L 12/911, H04L 12/913, H04L 12/851, H04L 12/801, H04L 12/927, H04Q 3/00

(54) **A SYSTEM AND A METHOD FOR RESOURCE CONTROLLING OF THE ACCESS NETWORK**
SYSTEM UND VERFAHREN ZUR BETRIEBSMITTELKONTROLLE DES ZUGANGSNETZES
SYSTEME ET PROCEDE DE COMMANDE DE RESSOURCE DU RESEAU D'ACCES

(30) Priority: 26.09.2005 CN 200510105022; 24.01.2006 CN 200610002224
(43) Date of publication of application: 18.06.2008
(73) Proprietor: Huawei Technologies Co., Ltd., Longgang District Shenzhen, Guangdong 518129 (CN)
(72) Inventor: OUYANG, Weilong, Guangdong 518129 (CN)
(74) Representative: Körber, Martin Hans
(86) International application number: PCT/CN2006/002513
(87) International publication number: WO 2007/033612

(56) References cited:
- WO-A1-2004/030393
- WO-A2-2005/050917
- CN-A- 1 406 006
- CN-A- 1 620 791
- US-A1- 2003 074 443
- "NGN Functional Architecture; Resource and Admission Control Subsystem (RACS); Release 1; Draft ETSI ES 2XX XXX" ETSI STANDARDS, LIS, SOPHIA ANTIPOLIS CEDEX, FRANCE, no. V 1.5.0, 1 January 2005 (2005-01-01), XP014028861 ISSN: 0000-0001
- ARCHITECTURE AND TRANSPORT WORKING GROUP: "DSL Evolution - Architecture requirements for the support of QoS-enabled IP services, TR-059" INTERNET CITATION 1 September 2003 (2003-09-01), pages 1-48, XP002586758 Retrieved from the Internet: URL:http://www.broadband-forum.org/technic al/download/TR-059.pdf [retrieved on 2010-06-10]
- "An architectural framework for support of Quality of Service in packet networks; Y.1291 (05/04)" ITU-T STANDARD IN FORCE (I), INTERNATIONAL TELECOMMUNICATION UNION, GENEVA, CH, no. Y.1291 (05/04), 7 May 2004 (2004-05-07), XP017404356
- TROMPARENT M-M: "Communication protocol for interdomain resource reservation" PROCEEDINGS OF THE INTERNATIONAL SOCIETY FOR OPTICAL ENGINEERING (SPIE), SPIE, USA, vol. 3126, 1 August 2004 (2004-08-01), pages 255-266, XP002437974 ISSN: 0277-786X

## Description

### Field of the Invention

The present invention relates to the technical field of network communication technology, and in particular, to a system and method for controlling resources of an access network.

### Background of the Invention

With fast development of the communication technology, the broadband network gradually is widely used in the industry because of the abundant bandwidth and the powerful ability to provide services.

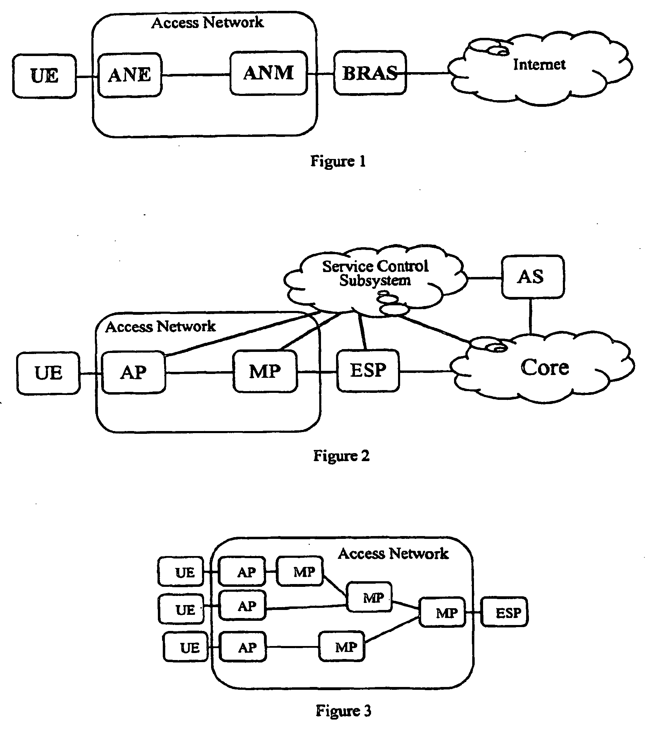

At present, in a broadband network, the network architecture as shown in Figure 1 is adopted in the broadband Metropolitan Area Network (MAN), and the user device uses an access network terminal equipment (ANE) to access the network. An access network multiplexer device (ANM) multiplexes the Layer 2 data of the ANEs of a plurality of users, and uses a public uplink of the ANM to access a broadband access server (BRAS). The BRAS performs the Layer 2 termination, provides authentication, charging, authorization and Layer 3 services, and acts as the proxy device of the user to access the Internet.

Because at present the devices all adopt the Quality of Service (QoS) system of the differentiated service (DS), it is possible to classify flows within the local device, determine the priority, and perform the bandwidth control, so as to ensure that the flow with a high priority may be given a priority to obtain resources.

However, because the devices within the entire broadband network belong to different operators, the service flows cannot be classified universally so as to implement differentiated services. Thus, an end-to-end QoS cannot be assured for various services.

Meanwhile, because of the inherent multiplexing capability of the access network, various services cannot obtain the resources required, so that the QoS of the services cannot be assured.

Therefore, in the present access network, an end-to-end QoS cannot be provided, and a corresponding bandwidth cannot be dynamically allocated according to information such as the service type. Thus, the access network cannot yet provide a satisfying differentiated service for the operator and the user.

In other words, in the broadband network, a problem that the QoS cannot be assured in the "last mile" (i.e. the access network) exists. This problem baffles and blocks the development of the broadband network severely.

Furthermore, in other access networks, the QoS for the service may not be assured. In other words, the user may not be provided with an end-to-end QoS assurance. Therefore, the service performance of the network is reduced.
The Document "NGN Functional Architecture; Resource and Admission Control Subsystem (RACS); Release 1; Draft ETSI ES 2XX XXX" ETSI STANDARDS, LIS, SOPHIA ANTIPOLIS CEDEX, FRANCE, no. V1.5.0, 1 January 2005 (2005-01-01), XP014028861ISSN: 0000-0001 discloses the functional of RACS.
Document "DSL Evolution - Architecture requirements for the support of Qos-enabled IP services, TR-059" INTERNET CITATION 1 September 2003 (2003-09-01), pages 1-48, XP002586758 Retrieved from the internet: URL:http://www.broadband-forum.org/technical/download/TR-059.pdf [retrieved on 2010-06-10] discloses an architecture of xDSL.
Both of these documents fails to teach or suggest any solution to solve the above-described technical problem.

### Summary of the Invention

The object of the present invention is to provide a system and method for access network resource control, so that differentiated services may be provided for different users or services in the access network. Thus, an ead-to-end QoS assurance may be realized in the next generation communication network.

The object of the present invention is achieved through following technical schemes:
The present invention provides an access network resource control system, comprises an edge service point, a multiplexer point and an access point;
the edge service point comprises a first resource control unit, configured to perform control on service flows passing the edge service point according to a service policy and resource usage parameter information;
wherein the first resource control unit comprises a service control module, a resource carrying control module, a flow control module, a reserved-resource enforced module and a shared-resource enforced module;
   wherein
the service control module is configured to obtain an IP address of an user as well as the information of the service policy and the parameter information of the allocated maximum resources available for the user when the user passes authentication, bind the IP address of the user, an outer-link identification, the service policy and the parameter information of the maximum resources available for the user; and send the service policy information to the flow control module and send the parameter information of the maximum resources available to the resource carrying control module; wherein the outer-link identification is used as a user ID on a link layer that can be identified by the edge service point;
the resource carrying control module, configured to allocate resources of the physical channel for the user according to the outer-link identification, and inform the shared-resource enforced module to perform parameter configuration; the shared-resource enforced module is configured to configure parameters of shared resources according to a shared-resource allocation result sent by the resource carrying control module, and provice the flow control module with the configured parameters.

The present invention further provides a method for implementing access network resource control, including:
determining, by an edge service point, a service policy and resource usage parameter information, and performing resource control on an ESP device;
determining, by the ESP device, an access point device in a path passed through by a service according to the information, and sending the information to the access point device; and
performing, by the access point device, access network resource control according to the service policy and the resource usage parameter information.
wherein the edge service point comprises a service control module, a resource carrying control module, a flow control module, a reserved-resource enforced module and a shared-resource enforced module;
wherein the process of determining a service policy and resource usage parameter information by the edge service point and performing resource control on the edge service point comprising:
obtaining, by the service control module, an IP address of an user as well as the information of the service policy and the parameter information of the allocated maximum resources available for the userwhen the user passes authentication, binding the IP address of the user, an outer-link identification, the service policy and the parameter information of the maximum resources available for the user; and sending the service policy information to the flow control module and sending the parameter information of the maximum resources available to the resource carrying control module; wherein the outer-link identification is used as a user ID on a link layer that can be identified by the edge service point;
allocating, by the resource carrying control module, resources of the physical channel for the user according to the outer-link identification; informing the shared-resource enforced module to perform parameter configuration; wherein the shared-resource enforced module is configured to configure parameters of shared resources according to a shared-resource allocation result sent by the resource carrying control module, and provide the flow control module with the configured parameters.

It can be seen from the above technical scheme provided by the present invention that the problem of the QoS of the "last mile" in the next generation communication network described in the prior art is resolved by the present invention, so that the biggest obstacle in providing the QoS of the end-to-end service in the network is eliminated. Thus, the end-to-end QoS may be assured.

In other words, with the implementation of the present invention, bandwidth reservation may be dynamically performed according to the service in the access network, and the bandwidth resources may be effectively used. Meanwhile, the processing mode of dynamic topology discovery may be employed in the access network, which lowered the maintenance cost of the operator.

Furthermore, implementing the effective "threshold control" in the access network may effectively reduce the possibility of attacks to network such as Distributed Denial of Service (DDOS), so that the security and reliability of the network is increased.

### Brief Description of the Drawings

Figure 1 is a schematic diagram showing the architecture of an existing access network;
Figure 2 is a schematic diagram showing the architecture of an access network applied in the present invention;
Figure 3 is a schematic diagram showing the topology of the access network applied in the present invention;
Figure 4 is a schematic diagram showing the specific implementing structure of an access network resource control system according to the present invention;
Figure 5 is a flow chart showing the specific implementing process when a user logs on the network in the present invention;
Figure 6 is a flow chart showing the specific implementing process when a user logs on an Application Subsystem (AS) in the present invention;
Figure 7 is a flow chart showing the specific implementing process when a user leaves the network in the present invention; and
Figure 8 is a flow chart showing the specific implementing process when a user leaves the AS in the present invention.

### Detailed Description of the Embodiments

The core of the present invention is to arrange a resource control unit in each point device of an access network for implementing a corresponding resource control management according to the QoS requirement of a user or service in the access network, so as to resolve the problems of providing a dynamic bandwidth allocation and a service based QoS assurance in the access network.

The structure of a network system including the access network applied in the present invention is illustrated in combination with the drawings. As shown in Figure 2, the network system includes:
an Application Subsystem (AS), adapted to provide a user accessed via the access network with a corresponding service, where different Application Subsystems provide different services;
a Service Control Subsystem (SCS), adapted to determine information of the resource usage parameter and service policy of the access network according to requirements of the user or service, and send such information to the access network system; specifically in the present invention, the information is sent via an Edge Service Point (ESP) to the access network system;
an Edge Service Point (ESP), adapted to make the access network access an access device of a core network; in the present invention, attention is mainly paid to the process that the ESP cooperates with the access network to implement the access network resource control;
an Access Point (AP) and a Multiplexer Point (MP) of the access network, each adapted to connect with each other to form an access network system; these points are constitutional points of the access network; the present invention mainly focuses on resolving the problem of resource control management on each point, and realizing the QoS assurance of the access network;
a Core (i.e. IP core network), the user accessed via the access network being able to log on each AS via the IP core network to obtain various services, and carry out other communication services. The specific technology adopted in this part is not discussed in the present invention.

In Figure 2, the processing procedure for realizing the QoS assurance, i.e. for implementing the resource control of the access network, mainly includes following processes.

First, the SCS sends the QoS required by the AS to the control points in all the paths from the access network to the AS.

Then each control point assure the QoS according to the QoS parameter including bandwidths, so as to realize the QoS from the user end to the application end or from the user end to the user end.

With respect to the access network, a QoS request may be sent to the internal of the access network via an in-band or out-band channel of the ESP. The MP in the access network ensures that the QoS required is provided according to the requirements, and may control an AP or cascaded MP to assure the QoS required, so that the QoS may be assured in the entire access network.

In order to realize the QoS of the entire access network, a QoS assurance mechanism from above to below is required, which classifies the QoS requirements of the access network into QoS requirements among different devices and inside different devices of the access network. After that, the QoS assurance mechanisms among various devices are coordinated, so as to assure the QoS of the entire access network.

In order to implement the present invention, it is required to know the topology among the point devices in the access network system. The topology of the access network system is as shown in Figure 3, which mainly includes AP devices and MP devices. Take a digital subscriber line (DSL) access network as an example, the operation mode of the MP includes: direct connecting AP, direct connecting MP, and connecting AP and MP at the same time. The AP is connected with the user directly.

In Figure 3, broadband access technologies such as DSL, passive optical network (PON) and Worldwide Interoperability for Microwave Access (Wimax) may be used between AP and MP. Link technologies such as asynchronous transfer mode (ATM), Ethernet, Wimax and PON may be used between MP and MP or between MP and ESP for multiplexing according to the networking situation.

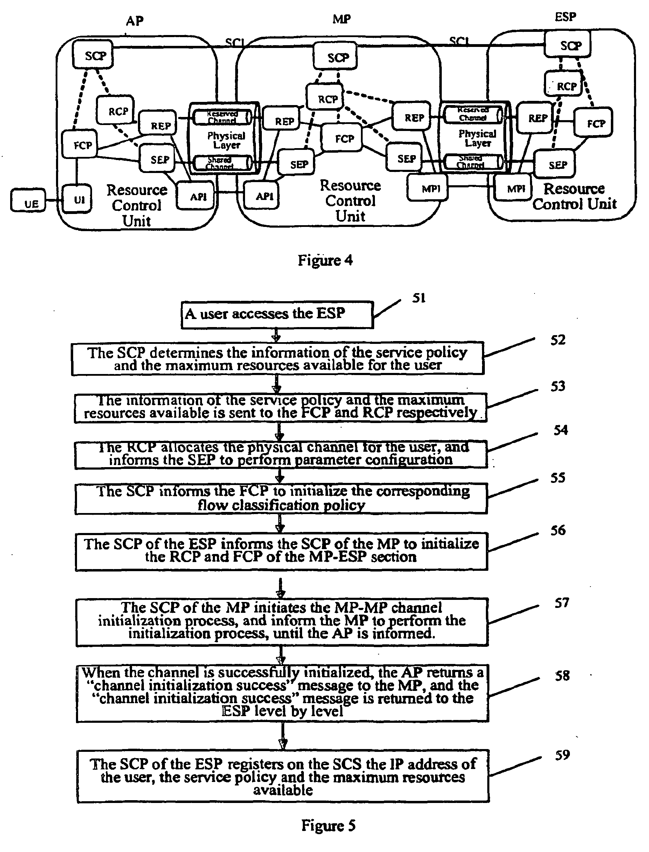

Based on the topology of the access network system provided in Figure 3, and because the resource control management for the access network needs the cooperation of the ESP device, the access network system provided by the present invention supports the QoS assurance. As shown in Figure 4, the system mainly includes resource control units arranged in each point (AP and MP) of the access network and in the ESP. The resource control units are adapted to control the service flow passing through each point according to the information of the resource usage parameter and the service policy. Furthermore, a communication interface is provided between the resource control units, and information generated during various resource control processes is transferred via the communication interface.

In the present invention, the specific structure of the resource control unit is as shown in Figure 4, which includes:
a service control module, i.e. a Service Control Point (SCP), adapted to determine the information of the service policy and the resource usage parameter required during the access network resource control process, and send this information within the local device or to a neighbor device; in the system as shown in Figure 2, the SCS may enter the SCP of the access network via a Service Control Interface (SCI) of the ESP; the SCP of the ESP also controls the SCP in the AP device and MP device of the access network via the SCI;
a resource carrying control module, i.e. a Resource carrying control Point (RCP), adapted to allocate the shared resources and reserved resources in the device, ensuring that the reserved resources are not affected by the shared resources, and ensuring that the shared resources can be effectively used;
a flow control module, i.e. a Flow Control Point (FCP), which is a specific enforcing module of the resource control in the device; the flow control module is adapted to perform flow classification according to the service policy sent by the SCI in the device, and enforce the corresponding control policy, including determining the priority of the flow, scheduling the policy and implementing the "threshold-control" function; for a multicast service, the flow control module further needs to perform the functions of the proxy and copy the multicast packet;
a reserved-resource enforced module, i.e. an Reserved-resource Enforced Point (REP); the REP is adapted to configure the parameter information of the reserved resource channel, so that a flow may be sent to a reserved channel according to a reserved policy via the flow control module; thus, the flow is ensured to obtain the reserved resources, and the reserved resources are not overdrawn;
a shared-resource enforced module, i.e. a Shared-resource Enforced Point (SEP); the SEP is responsible for configuring the parameter information of the shared resource channel, so that the flow may be sent to the shared resource channel according to the priority and the scheduling policy via the flow control module; thus, the shared resources are effectively shared, and the reserved resources are not effected.

In the system as shown in Figure 4, in order to realize the information exchange between the resource control units, interfaces for communication between the resource control units need to be provided, so that the required information during the access network resource control may be exchanged. The interfaces provided by the resource control units arranged in different point devices are different. Hereinafter, the different interfaces included in the point devices in different situations will be illustrated respectively.
(1) When the resource control unit is arranged in the AP, the resource control unit includes:
   a User Interface (UI), which is an interface between the user and the access point device in the access network; the user accesses the channel of the access network via this interface;
   an AP interface (API), which is an interface between an AP and an MP; the AP interface is adapted to connect the AP and MP; the API is related to the specific access technology used by the user, where the access technology may be DSL, PON, Wimax or WLAN, etc.
(2) When the resource control unit is disposed in the MP, the resource control unit includes an API and an MP interface (MPI), which is an interface between MP and MP or between an MP and an ESP, where:
   the MPI, which is used as an interface for cascading of MP devices or for connecting to the ESP, may be an interface based on the technologies such as ATM, Ethernet or PON.
(3) When the resource control unit is arranged in the ESP, the resource control unit includes only the MPI.

In the system as shown in Figure 4, in order to implement the resource control management of the entire access network, each AP device needs to obtain communication address information of the neighbor device, so as to exchange information needed during the process of performing resource control between the devices on the basis of the corresponding communication address information.

Therefore, the resource control unit further needs to include at least one of the following two modules, so as to ensure the obtaining of the topology information. Specifically, the two modules are:
a topology discovering module, adapted to discover dynamically the communication address and device information of the neighbor device, and save in the local device the communication address and device information of the neighbor device as the corresponding topology information;
a topology configuring module, adapted to save statically in the local device the communication address and device information configuration of the neighbor device as the corresponding topology information.

In other words, the discovering process of the corresponding network topology may be implemented in two modes, i.e. the static configuration mode and/or dynamic discovering mode. Hereinafter, the two modes will be illustrated respectively.
(1) Static configuration, which is specifically implemented by the topology configuring module.
   The communication address of a counterpart may be obtained through the static configuration on the AP, MP and ESP. The configuration information of the user device (hereinafter will be referred to as *user* for short) may also be saved in the device or a network manager statically. When the device is initiated, the AP and the MP register its communication address and user information on the uplink device.
(2) Dynamic discovering, which is specifically implemented by the topology discovering module.
   The priority information or path information and the communication address may be configured on the AP or MP. The AP or MP finds a device with a higher priority through sending an uplink device discovering message to the SCI to find a device with a higher priority, takes this device as the uplink device of the AP or MP, and registers the user information and communication address of the AP or MP on this device.

The dynamic discovering may include: configuring priority information on a device; determining a device with higher priority through a discovering message and taking the device with higher priority as the uplink device; and then registering the user information and communication address of the device on the uplink device. Meanwhile, when a new downlink device joins, related information of this newly joined device is reported dynamically to an uplink device of this newly joined downlink device. In other words, when a device newly joins the network, this device, as a downlink device, needs to report the related information to the uplink device, so as to implement the process that the newly joined device registers itself on the uplink device. The related information here may include the user information and communication address information.

A specific dynamic discovering process may include following processes:
(1) Each device, such as AP, MP or ESP, in the access network is preconfigured with information of priority or path. When it is determined that the priority in a discovering response message, which is sent in the broadcast mode or multicast mode by an opposite device and is received from the SCI, is higher than the priority of the local device, the opposite device is the uplink device of the local device.
   Specifically, the process may be as follows: A device sends initiatively a discovering message to the SCI in a broadcast mode or multicast mode. A device that receives the discovering message sends a discovering response message according to the priority information of the device that receives the discovering message. The device that receives the discovering response message determines the uplink device and the downlink device according to the priority information in the response, i.e. when the priority in the response is higher than locally configured priority, the device that sends the response is the uplink device of the local device; when the priority is lower than the locally configured priority, the corresponding device that sends the response is the downlink device of the local device.
   When a point device has only the uplink device, this point device is an AP; when a point device has only the downlink device, this point device is an ESP; otherwise, the corresponding point device is an MP.
(2) When the uplink device is discovered, the local device reports to the uplink device the communication address of the local device and the user uplink information that is related to the uplink device and is managed via the SCI of the local device.
   The device that discovers the uplink device may be an AP or MP, where:
   when the device is an AP, the AP reports directly to the uplink device the uplink information of the device where the SCI of the AP is located, such as Permanent Virtual Circuit (PVC), VLAN;
   when the device is an MP, and a one-to-one correlation cannot be established between the uplink information and the downlink information of the downlink device, the MP needs to register the uplink information and the downlink information of the downlink device to the uplink device. For example, the PVCs of a plurality of APs are connected to the uplink device via the same VLAN of the MP.
(3) When the corresponding uplink device receives the user uplink information and the communication address of the downlink device reported by the downlink device, the uplink device needs to convert the user uplink information of the downlink device to the user downlink information in the local device, and find the corresponding user uplink information of the local device. When a further uplink device exists with respect to the local device; the above process. (2) needs to be executed again, so as to further send the downlink device information received by the present device to the corresponding uplinkdevice of the local device. Meanwhile, it is required to establish a correlation between the user downlink information and the user uplink information as well as a correlation between the communication address of the downlink device and the communication address of the local device, i.e. establish a correlation between the ingress link information and the egress link information on the present device. The corresponding correlation may be specifically configured, or statically configured, by the network manager. Alternatively, a dynamic correlation may be established according to the link strategy of the device.
   Here, the user uplink information refers to other information related to the user that exists on the interface connected with the uplink device, such as the logic link number (VLAN, PVC) and the physical port of the user, where other information is managed by the SCI of the present device. The user downlink information refers to other information related to the user that exists on the interface connected with the downlink device, such as the logic link number (VLAN, PVC) and the physical port of the user, where other information is managed by the SCI of the present device.
(4) When a new downlink device joins, or when the user information of the downlink device is changed (increased or decreased), the presentdevice dynamically reports the changed user uplink information to the uplink device in time. In other words, when the user information is changed, the changed user uplink information is reported, and when a new device joins, the user uplink information of the new device is reported.

In order to be able to detect whether the downlink device is changed, when the downlink device finds an uplink device and performs registration on the uplink device, the downlink device may send a *keep alive* message to the uplink device at a definite time or periodically When the uplink device does not receive this message within a predefined period of time, the uplink device sends a *connect down* message to the uplink device to inform the downlink device of the status change of the present uplink device.

Furthermore, the uplink device sends the *keep alive* message to the downlink device at a definite time or periodically. When the downlink device does not receive the keep *alive* message from the uplink device within a predefined period of time, the downlink device sends a *connect down* message to inform the uplink device of the status change of the present downlink device.

In the present invention, the uplink device or downlink device may also send the *connect down* message to a downlink device or uplink device of the opposite device, so as to disconnect the opposite device from the local device.

The device that sends the *keep alive* message may request the counterpart to return a response or delayed response, or may choose that the counterpart is not required to be configured to return a response.

For a newly joined downlink device, this downlink device needs to send a broadcast discovering message or a multicast discovering message initiatively, so as to determine the corresponding uplink device and perform registration on the uplink device.

The user of the downlink device includes the user directly accessed the device as well as the user multiplexed through a multilevel multiplexer device, i.e. when a user, which is regarded as a downlink device, directly or indirectly accessed the device joins or when the user information Is updated, it Is required to report to the corresponding uplink device level by level.

When the topology information of the access network is obtained through the static configuration or dynamic discovering, each device in the entire access network may obtain the respective uplink device and the downlink device as well as the user information and the communication address of the respective uplink device and the downlink device.

The processing procedure of the access network resource control provided by the invention is illustrated in combination with the drawings. Specifically, the illustration is made with different processing procedures.

### (I) The processing procedure when a user (i.e. the user device) logs on the network

As shown in Figure 5, the resource control processing procedure when a user logs on the network includes following processes:

Process 51: the user accesses the ESP.

The user access the ESP according to a path UE-AP-MP-ESP, the ESP analyzes the layer 2 information of the user, performs authentication on the user, performs IP address allocation for the user, and determines the maximum resources available for this user.

Process 52: when the user passes the authentication, the SCP in the ESP determines the information of the service policy and the parameter information of the maximum resources available for the user.

Specifically, this process may be as follows: when the user passes the layer 2 authentication, the ESP obtains the IP address of the user as well as the information of the service policy and the parameter information of the allocated maximum resources available for the user, and binds the IP address of the user, the Outer-Link Identification (O-LID), the service policy and the parameter information of the maximum resources available for the user via the SCP.

The mode for obtaining the O-LID may be as follows: when an account is opened for a user, a basic bandwidth needs to be initialized for this user, and a global unique O-LID of the user needs to be created, so as to ensure that the user is able to access the network normally at the very start. The ID includes physical location information such as the port number of the link in the ESP, the virtual connection identifier (VCI), the virtual local area network (VLAN) and the permanent virtual connection (PVC) index, or other logic link number. The ID is used as the user ID on the link layer that can be identified by the ESP.

Process 53: the SCP in the ESP sends the service policy information to the FCP, and sends the parameter information of the maximum resources available to the RCP.

Specifically, the SCP informs the RCP of the parameter information of the maximum resources available for the user according to the information that is bound.

Process 54: the RCP allocates resources of the physical channel for the user according to the O-LID, and informs the SEP in the ESP to perform parameter configuration.

Specifically, the RCP allocates all the resources of the physical channel allocated to the shared channel within the ESP, and allocates a corresponding channel number Internal-Shared Channel ID (I-SCID) to the shared channel.

Thus, all the physical channel resources of the user may be used on the SEP, whereas no resource is available for the user on the REP, i.e. no reserved resource is allocated for the user.

Process 55: the SCP informs the FCP to initialize the corresponding flow classification policy according to the I-SCID and the service policy of the user.

Here, the I-SCID is allocated by the RCP. When the shared channel is successfully allocated, the RCP informs the SCP of the successful allocation of the shared channel and the actual value of I-SCID. On this basis, the SCP informs to configure the FCP according to the corresponding service policy and the I-SCID.

With the above processing procedure, the initialization process in the ESP is accomplished, i.e., the resource control processing in the ESP is accomplished.

Process 56: when the ESP initializes the user successfully, the SCP of the ESP informs the SCP of the MP via the SCI interface to initialize the RCP and FCP of the MP-ESP section according to the QoS initialization result of the ESP (such as the allocated shared channel and the corresponding parameter information about flow control), so as to map all the flows of the user onto the shared channel and allocate the I-SCID. Furthermore, the I-SCID here is the same ID as the I-SCID in processes 54 and 55, which is used for associating the created shared channel with the service policy for using the shared channel.

Process 57: when the MP-ESP channel is successfully initialized, the SCP of the MP initiates the channel initialization process. Then, the MP is informed by a downlink MP recursively via the SCI interface to perform the initialization process as described in process 52 to process 56, until the AP is informed.

Process 58: when the channel is successfully initialized, the AP returns a "channel initialization success" message to the MP, and the "channel initialization success" message is returned to the ESP level by level.

Process 59: when receiving the "channel initialization success" message from the MP, the SCP of the ESP registers on the SCS the IP address of the user, the service policy and the maximum resources available for the user.

Thus, the channel initialization process of the user in the entire access network is accomplished.

After that, the access network does its utmost to provide the user with a service. The device may employ the QoS technology of the Diff-Serv (DS) to assure the QoS for the user, and the participation of the SCP is not required. The FCP performs processings such as remark, priority allocation and discard on the data flow of the user according to the flow classification policy. The SEP performs bandwidth control on the data flow of the user according to the parameter information of the maximum resources available for the user, i.e. when the port is congested, the data packet of the user or a different user is forwarded or discarded according to the priority scheduling policy, so as to ensure that the network resources may be effectively shared by the user or among users.

### (II) The processing procedure when a user logs on the AS

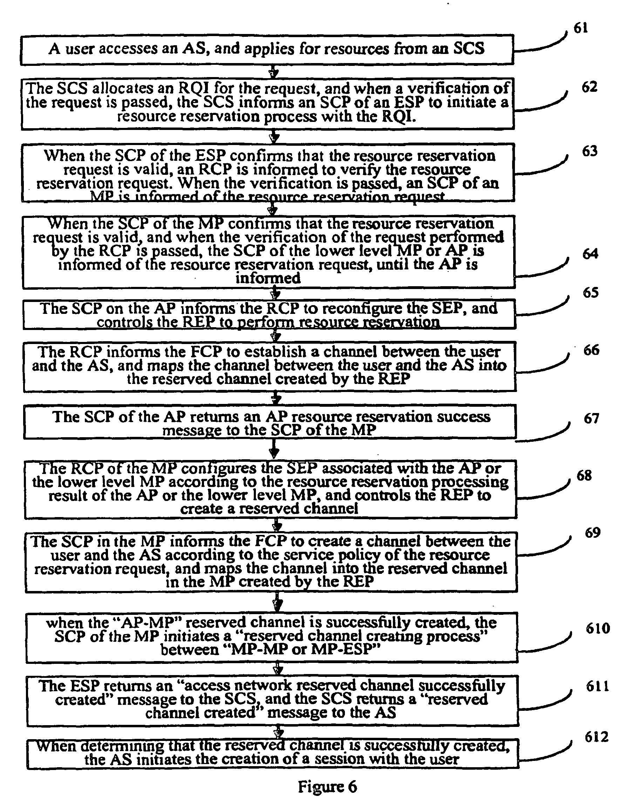

As shown in Figure 6, the resource control processing procedure when the user logs on the AS includes the following processes.

Process 61: the user accesses the AS, and applies for resources from the SCS.

The user accesses the AS according to the path UE-AP-MP-ESP-CORE-AS. When the service level authentication is passed and the user selects the corresponding service, the AS submits a request to the SCS for creating a reserved channel for the user.

Process 62: the SCS allocates a global unique Reserve Quest Index (RQI) for the request, and verifies the request. When the verification is passed, the SCS informs the SCP of the ESP to initiate a resource reservation process with the RQL

Specifically, the verification may include the verification of whether the user is registered, whether there are resources for reservation, whether the service policy allows the usage of the service, etc.

Specifically, the resource reservation process may include:

Process 63: when the SCP of the ESP confirms that the resource reservation request is valid, the RCP is informed to verify the resource reservation request. The verification specifically includes verification of whether the user has resources for reservation, whether the ESP has resources for reservation and whether the service policy of the user allows the user to reserve the resources. When the verification is passed, the SCP of the MP is informed of the resource reservation request via the SCI interface.

Process 64: when the SCP of the MP confirms that the resource reservation request is valid, the RCP is further informed to perform the verification. When the verification is passed, the SCP of the lower level MP or AP is informed of the resource reservation request via the SCI interface, until the AP is informed of the resource reservation request, and the corresponding processing described above needs to be implemented on the respective MP and AP

Process 65: when the verification performed by the SCP of the AP is passed, the SCP on the AP informs the RCP to reconfigure the SEP, and controls the REP to perform the resource reservation.

Specifically, the resource reservation includes: reducing the shared resources and allocating the resources to a reserved channel, controlling the REP to create a reserved channel, and meanwhile initializing QoS parameters (such as unidirection or bidirection) of the reserved channel and allocating the I-RCID of the reserved channel.

Process 66: when the configuration is successfully accomplished, the RCP informs the FCP to establish a channel between the user and the AS according to the service policy of the resource reservation request, and maps the channel between the user and the AS into the reserved channel created by the REP with the I-RCID.

Process 67: when the above configuration is accomplished on the AP, the SCP of the AP creates the binding relationship among the RQI, O-LID and I-RCED, and returns an AP resource reservation success message to the MP via the SCI interface.

Process 68: when the SCP of the MP receives the AP resource reservation success message sent by the AP, the RCP of the MP configures the SEP associated with the AP or the lower level MP according to the resource reservation processing result (such as specific reserved resource information) of the AP or the lower level MP, i.e. reduces the shared resources of the SEP, controls the REP to create a corresponding reserved channel according to the binding relationship among the RQI, O-LID and reserved channel parameter returned from the AP, and allocates the I-RCID information within the present MP.

Process 69: when the configuration performed by the RCP in the MP is accomplished, the SCP in the MP further informs the FCP to create a channel between the user and the AS according to the service policy of the resource reservation request, and maps with I-RCID the channel into the reserved channel in the MP created by the REP. Thus, the reserved channel between the AP and the MP is also created successfully.

Process 610: when the "AP-MP" reserved channel is successfully created, the SCP of the MP initiates a "reserved channel creating process" of "MP-MP" segment or "MP-ESP" segment The specific creating processes are similar to the processes described in the process 68 and process 69, which will not be described again here.

Process 611: when the "MP-ESP" reserved channel is successfully created, the ESP returns an "access network reserved channel successfully created" message to the SCS, and the SCS returns a "reserved channel created" message to the AS when the reserved channel between the ESP and the AS is created. Thus, the resource reservation process in the access network section for the channel between the user and the AS is successfully accomplished.

Then, the AS may further perform modification operation on the parameter of the reserved channel by submitting a "reserved channel modification" request to the SCS.

Process 612: when determining that the reserved channel is successfully created, the AS initiates the creation of a session with the user.

A plurality of sessions of the AS may be carried in the reserved channel. Therefore, considering the security, a "threshold control" needs to be performed on the session between the AS and the user.

In order to provide the "threshold control" function, the AS needs to submit a "threshold control creation request" to the SCS with the RQI of the reserved channel. The SCS verifies whether the RQI already exists. If the verification is passed, i.e. if the ROI already exists, the "threshold control creation request" is sent to the ESP. The threshold control is only required to be implemented on the ESP.

During the session establishment, when it is confirmed that the "threshold control creation request," is valid, the SCP of the ESP informs the FCP to update the flow classification policy, and performs the "threshold control" management on all the sessions between the AS and the user, i.e. performs the threshold control on the passed flow of the session. Then, a "session creation success" message is returned to the SCS. When determining that the "session creation success" message is valid, the SCS returns the "session creation success" message to the AS. After that, when the session between the AS and the user is changed, a "threshold change" request may be submitted to the SCS, so as to modify the "threshold control" policy of the FCP, such as cancel the "threshold control", modify the threshold value of the "threshold control".

### (III) The processing procedure when the user leaves the AS

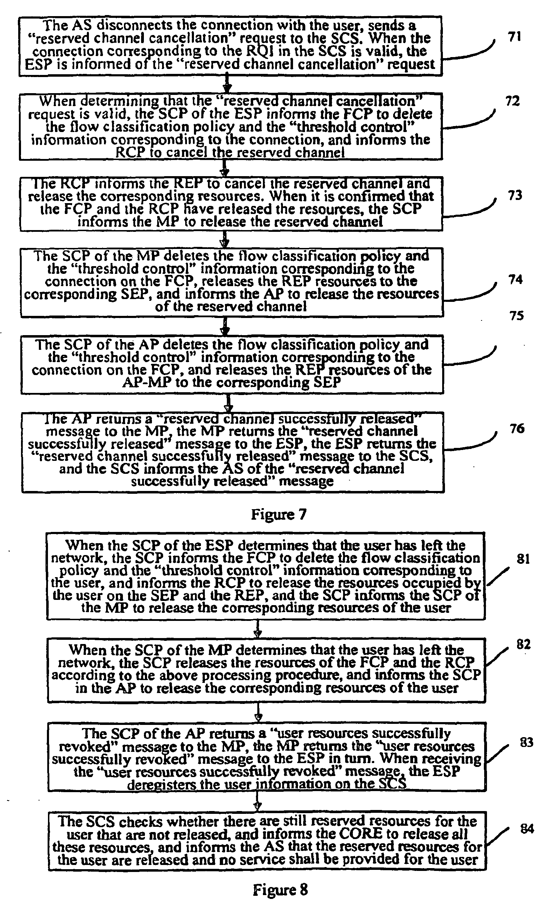

As shown in Figure 7, when the user leaves the AS, the specific implementing process includes:

Process 71: when the AS disconnects the connection with the user, the AS sends a "reserved channel cancellation" request to the SCS. When the connection corresponding to the RQI in the SCS is valid, the ESP is informed of the "reserved channel cancellation" request.

Process 72: when determining that the "reserved channel cancellation" request is valid, the SCP of the ESP informs the FCP to delete the flow classification policy and the "threshold control" information corresponding to the connection, and informs the RCP to cancel the reserved channel.

Process 73: the RCP informs the REP to cancel the reserved channel and release the corresponding resources, and allocates the resources released by the REP to the SEP. When it is confirmed that the FCP and the RCP have released the resources, i.e. have deleted the flow classification policy, the "threshold control" information and the reserved channel, the SCP informs the MP via the SCI interface to release the reserved channel.

Process 74: according to the above processes 72 and 73, the SCP of the MP deletes the flow classification policy and the "threshold control" information corresponding to the connection on the FCP, releases the REP resources of the MP-ESP and the REP resources of the MP-MP or AP respectively to the corresponding SEP, and then informs the AP to release the resources of the reserved channel.

Process 75: according to the above processes 72 and 73, the SCP of the AP deletes the flow classification policy and the "threshold control" information corresponding to the connection on the FCP, and releases the REP resources of the AP-MP respectively to the corresponding SEP.

Process 76: the AP returns a "reserved channel successfully released" message to the MP, the MP returns the "reserved channel successfully released" message to the ESP, the ESP returns the "reserved channel successfully released" message to the SCS, and the SCS informs the AS of the "reserved channel successfully released" message.

### (IV) The processing procedure when a user leaves the network

As shown in Figure 8, the processing process when the user leaves the network includes the following processes:

Process 81: when the SCP of the ESP determines that the user has left the network, the SCP first informs the FCP to delete the flow classification policy and the "threshold control" information corresponding to the user, and then informs the RCP to release the resources occupied by the user on the SEP and the REP. If the resources of the FCP and RCP are released, i.e. the flow classification policy, the "threshold control" information and the reserved channel are deleted, the SCP informs the SCP of the MP via the SCI interface to release the corresponding resources of the user.

Process 82: when the SCP of the MP determines that the user has left the network, the SCP releases the resources of the FCP and the RCP according to the above processing procedure of the SCP in the ESP, i.e. deletes the flow classification policy, the "threshold control" information and the reserved channel, the SCP in the AP is informed to release the corresponding resources of the user.

Process 83: when successfully releasing the resources of the FCP and the RCP, the SCP of the AP returns a "user resources successfully revoked" message to the MP, the MP returns the "user resources successfully revoked" message to the ESP. When receiving the "user resources successfully revoked" message, the ESP deregisters the user information on the SCS.

Process 84: the SCS checks whether there are still reserved resources for the user that are not released, and informs the CORE to release all these resources, and informs the AS that the reserved resources for the user are released and no service shall be provided for the user.

### (V) The processing procedure in a multicast service

The difference between a multicast service, i.e. a point(source) to multi-point service, and a unicast service, i.e. a point to point service, is that packet copy needs to be performed in the multicast service. In the multicast service, when creating the "reserved channel", the ESP needs to determine whether there exist a plurality of users in the ESP who need to join the same multicast group. If there exist a plurality of users, it is only required to create a reserved channel from a user to the ESP, and not necessary to create a reserved channel from a multicast source to the ESP. The reserved channel created when a first user joins the multicast group is shared. Meanwhile, it is required to configure the FCP, so as to copy the data of the reserved channel between the multicast source and the ESP to the reserved channel between the ESP and the user. The above processing also needs to be performed for the SCP on the access network point. The multicast service also needs to log on the AS to request to "create a reserved channel" and "create a threshold control". Only when the threshold control is active, the user is able to access the multicast service.

Here, the SCP on the ESP needs to identify that the request is a multicast channel creation request, and furthermore, the ESP needs to create a counter for each multicast group during the creation of the reserved channel. Each time when a user joins the multicast group, the value of the counter is increased by 1. When the value of the counter is increased by 1, the FCP is informed to add a specific flow classification policy for performing packet copy for the connection that is added to the multicast group, so as to copy the packet into the reserved channel corresponding to the I-RCID. Each time when a user leaves, the value of the counter is decreased by 1. When the value of the counter is 0, the FCP is informed to delete the specific flow classification policy. When the specific flow classification policy is successfully deleted, the SCP deletes the counter of the multicast group.

In order to enable the users of each multicast group to share the reserved channel from the multicast source to the ESP, when creating the reserved channel for the multicast service, the ESP needs to create the counter for each multicast group, and informs the access network point directly connected with the ESP to create the reserved channel for the user who joins the multicast group. Meanwhile, the ESP also informs the access network point directly connected with the ESP to create the reserved channel for the user who joins the multicast group.

In order to enable other access network points to share the reserved channel from the multicast source to the local point, a counter with the same function needs to be created for the reserved channel of the multicast group. The access network point directly connected with the present access network point is informed to create the reserved channel for the user who joins the multicast group, until the access network point directly connected with the user, i.e. AP, is informed.

The AP needs to create the reserved channel and configure the flow control module through the process of creating the reserved channel, and returns a success message and the parameters. The access network point directly connected with the AP creates the reserved channel from the local point to the AP according to the returned parameters, and checks whether the reserved channel with the access network point or ESP that is connected with the present point in uplink is created. If the reserved channel is not created, the access network point directly connected with the AP creates the reserved channel; otherwise, the created reserved channel is shared, and a new reserved channel is not required to be created. Then, the flow control module is configured, the packet sent via the channel between the upper level access network point and the present point is copied to all the channels between the local point and the AP that join the multicast group, and a success message and the reserved channel parameters are returned.

The ESP also executes the above processing procedure of the access network point, and returns a reserved channel creation success message and the corresponding parameters to the SCS. After that, the SCS creates the reserved channel from the multicast source to the ESP.

As described above, the present invention resolves the QoS problem in the "last mile", eliminates the biggest obstacle in providing the QoS of the end-to-end service. With the implementation of the present invention, bandwidth reservation may be dynamically performed according to the service, and the bandwidth resources may be effectively used. Meanwhile, the processing mode of dynamic topology discovery may be employed in the access network, which lowered the maintenance cost of the operator. Furthermore, implementing the effective "threshold control" in the access network may effectively reduce the possibility of network attack such as Distributed Denial of Service (DDOS), so that the security and reliability of the network is increased.

Only exemplary embodiments are described above. However, the protection scope of the present invention is not limited thereto. Additional substitutions and modifications readily occurred to those skilled in the art in the technical scope disclosed by the present invention fall within the protection scope of the present invention. Therefore, the protection scope of the present invention shall be defined by the protection scope of the claims.

## Claims

1. An access network resource control system, comprising an edge service point, a multiplexer point and an access point, **characterized in that**:
the edge service point comprises a first resource control unit, configured to perform control on service flows passing the edge service point according to a service policy and resource usage parameter information;
the access point comprises a second resource control unit, configured to perform control on service flow passing through the access point according to the service policy and resource usage parameter information; and
the multiplexer point comprises a third resource control unit, configured to perform control on service flow passing through the multiplexer point according to the service policy and resource usage parameter information;
wherein a communication interface is provided between the resource control units for performing a transfer of information;
wherein each of the first resource control unit, second resource control unit and the third resource control unit comprises a service control module, a resource carrying control module, a flow control module, a reserved-resource enforced module and a shared-resource enforced module;
wherein the service control module of the edge service point is configured to obtain an IP address of an user as well as the information of the service policy and the parameter information of the allocated maximum resources available for the user when the user passes authentication, bind the IP address of the user, an outer-link identification, the service policy and the parameter information of the maximum resources available for the user; and send the service policy information to the flow control module of the edge service point and send the parameter information of the maximum resources available to the resource carrying control module of the edge service point; wherein the outer-link identification is used as a user ID on a link layer that can be identified by the edge service point;
the resource carrying control module of the edge service point is configured to allocate resources of the physical channel for the user according to the outer-link identification, and inform the shared-resource enforced module of the edge service point to perform parameter configuration;
the shared-resource enforced module of the edge service point is configured to configure parameters of shared resources according to a shared-resource allocation result sent by the resource carrying control module of the edge service point, and provide the flow control module of the edge service point with the configured parameters.

2. The access network resource control system according to claim 1, wherein the flow control module of the edge service point is adapted to receive service policy information sent by the service control module of the edge service point and perform flow classification; furthermore, the flow control module of the edge service point is adapted to schedule and control a transferred service according to obtained parameter configuration information of the reserved-resource enforced module and the shared-resource enforced module of the edge service point.

3. The access network resource control system according to claim 1, wherein the first resource control unit further comprises a topology discovering module and/or a topology configuring module, wherein:
the topology discovering module is adapted to discover a communication address and device information of a neighbor device dynamically, and save the communication address and device information in a local device as topology information; and
the topology configuring module is adapted to take the communication address and device information of the neighbor device as the topology information, and save the communication address and device information in the local device statically.

4. A method for implementing access network resource control, comprising:
determining, by an edge service point, a service policy and resource usage parameter information, and performing resource control on the edge service point, ESP;
determining, by the edge service point, an access point device in a path passed through by a service according to the information, and sending the information to the access point device; and
performing, by the access point device, access network resource control according to the service policy and the resource usage parameter information; **characterized in that**,
wherein the edge service point comprises a service control module, a resource carrying control module, a flow control module, a reserved-resource enforced module and a shared-resource enforced module;
wherein the process of determining a service policy and resource usage parameter information by the edge service point and performing resource control on the edge service point comprising:
obtaining, by the service control module, an IP address of an user as well as the information of the service policy and the parameter information of the allocated maximum resources available for the user when the user passes authentication, binding the IP address of the user, an outer-link identification, the service policy and the parameter information of the maximum resources available for the user; and sending the service policy information to the flow control module and sending the parameter information of the maximum resources available to the resource carrying control module; wherein the outer-link identification is used as a user ID on a link layer that can be identified by the edge service point;
allocating, by the resource carrying control module, resources of the physical channel for the user according to the outer-link identification; informing the shared-resource enforced module to perform parameter configuration;
wherein the shared-resource enforced module is configured to configure parameters of shared resources according to a shared-resource allocation result sent by the resource carrying control module, and provide the flow control module with the configured parameters.

5. The method for implementing access network resource control according to claim 4, wherein in the developing of a multicast service, the method further comprises:
performing statistical operation on the number of the user joined each multicast group when the service control module of the ESP creates a multicast channel, and deleting the multicast channel when the number of the user joined the multicast group is 0; each time when a user joins the multicast group, informing the flow control module to add a specific flow classification policy to perform packet copy for a connection added to the multicast group, and copying the packet to a corresponding channel; and optionally, performing statistical operation on the number of the user joined the multicast group on an access network point between the ESP and the access network point directly connected with a user terminal.

6. The method for implementing access network resource control according to claim 5, wherein before the creating of the multicast channel for a multicast user by the ESP, the method further comprises:
sharing a reserved channel between a multicast source and the ESP, when it is verified that the reserved channel can be shared between the individual access network points of the reserved channel, which is used as a multicast channel, between the user in the multicast group and the ESP, creating the reserved channel between the user and the ESP, and configuring the flow control module to copy data of the reserved channel between the multicast source and the ESP to the reserved channel between the ESP and the user; or
creating no reserved channel for the user by the ESP but only sharing the available reserved channel between the ESP and the access network point, when it is verified that the reserved channel cannot be shared between the individual access network points of the reserved channel between the user in the multicast group and the ESP; and meanwhile, informing the user to share the reserved channel available between the ESP and the access network point via an interface of the access network point directly connected with the ESP, until the AP is informed.

7. The method for implementing access network resource control according to claim 6, wherein the process of creating the multicast channel for the multicast service specifically comprises:
informing, by the access network point connected with the ESP, an access network point of next lower level that is connected with the access network point connected with the ESP to create the reserved channel, which is used as the multicast channel, for a user terminal joined the multicast group; then informing an access network point of a further next lower level in turn, and so on, until informing an access network point that is directly connected with the user terminal; and then creating, by the access network point directly connected with the user terminal, a corresponding reserved channel, configuring the flow control module, and returning a reserved channel creation success message and parameter information;
creating, by an access network point of a next higher level of the access network point directly connected with the user terminal, a reserved channel with the access network point of the next lower level according to the parameter returned, and determining, by the access network point directly connected with the user terminal, whether the reserved channel between the local access network point and the access network point of the next higher level or the ESP is created; if the reserved channel between the local access network point and the access network point of the next higher level or the ESP is created, configuring the flow control module directly; otherwise, creating the corresponding reserved channel and then configuring the flow control module.

8. The method for implementing access network resource control according to claim 4, further comprising:
discovering a communication address and device information of a neighbor device dynamically, and saving the communication address and device information in the local device as topology information; and/or
configuring the communication address and the device information of the neighbor device as the topology information statically, and saving the communication address and the device information in the local device.

9. The method for implementing access network resource control according to claim 8, wherein the process of discovering the communication address and the device information of the neighbor device dynamically comprises:
configuring priority information on the device; receiving, by the device, a discovering message sent by an opposite device, and sending a discovering response message according to the priority information configured on the device; and determining, by a device receiving the discovering response message, an uplink device of the device receiving the discovering response message according to the priority information; and
registering uplink information and a communication address of the user on the uplink device that is determined; converting, by the uplink device, the received uplink information of the user into a corresponding downlink information of the user, and saving the downlink information of the user.

10. The method for implementing access network resource control according to claim 9, wherein the process of registering the uplink information and the communication address of the user on the uplink device comprises:
with respect to the access network point AP, reporting the uplink information of the device where the service control interface of the AP is located on the uplink device; and
with respect to the multiplexer point MP, when a one-to-one correlation between the uplink information and the downlink information of the downlink device exists, reporting only the uplink information, and when the one-to-one correlation cannot be established between the uplink information and the downlink information of the downlink device, registering the uplink information and the downlink information of the downlink device to the uplink device of the MP.

11. The method for implementing access network resource control according to claim 9, wherein:
the user uplink information comprises: information related to the user that exists on the interface connected with the uplink device, wherein the information related to the user is managed by the service control interface of the local device; and
the user downlink information comprises: information related to the user that exists on the interface connected with the down link device, wherein the information related to the user is managed by the service control interface of the local device.

12. The method for implementing access network resource control according to claim 11, further comprising:
when the uplink device on which the downlink device is registered has a further uplink device of a higher level that is connected with the uplink device, establishing correlations between the user downlink information and the user uplink information as well as between the communication address of the downlink device and the communication address of the local device, and reporting the corresponding user uplink information and the communication address of the local device to the further uplink device of the higher level.

13. The method for implementing access network resource control according to claim 12, wherein the correlations between the user downlink information and the user uplink information as well as between the communication address of the downlink device and the communication address of the local device are preconfigured by a network manager, or are statically configured, or are dynamically associated according to a link policy of the device.

14. The method for implementing access network resource control according to claim 9, wherein the dynamic discovering process further comprises:
reporting, by the local device, the user uplink information that is changed to the uplink device, when a new downlink device joins or when the user downlink information of the downlink device is changed.

15. The method for implementing access network resource control according to claim 14, further comprising detecting whether the downlink device is changed, wherein the method specifically comprises:
when the downlink device discovers the uplink device and registers on the uplink device, sending, by the downlink device, a keep alive message to the uplink device at a definite time or periodically; when the uplink device does not receive the *keep alive* message from the downlink device within a preconfigured period of time, determining that the downlink device is off line, and changing the user downlink information;
alternatively, the method further comprises: sending, by the uplink device, the *keep alive* message to the downlink device at a definite time or periodically; when the downlink device does not receive the keep alive message from the uplink device within a preconfigured period of time, determining that the uplink device is off line.

## Patentansprüche

1. Zugriffsnetzbetriebsmittel-Steuersystem, das einen Edge-Dienstpunkt, einen Multiplexer-Punkt und einen Zugriffspunkt umfasst, **dadurch gekennzeichnet, dass**:
der Edge-Dienstpunkt eine erste Betriebsmittelsteuereinheit umfasst, die konfiguriert ist, eine Steuerung an Dienstflüssen, die durch den Edge-Dienstpunkt verlaufen, in Übereinstimmung mit einer Dienststrategie und mit Betriebsmittelnutzungsparameter-Informationen auszuführen;
der Zugangspunkt eine zweite Betriebsmittelsteuereinheit umfasst, die konfiguriert ist, in Übereinstimmung mit den Dienststrategie- und Betriebsmittelbenutzungsparameterinformationen Steuerung an Dienstflüssen durchzuführen, die durch den Zugangspunkt laufen; und der Multiplexerpunkt eine dritte Betriebsmittelsteuereinheit umfasst, die konfiguriert ist, in Übereinstimmung mit den Dienststrategie- und Betriebsmittelbenutzungsparameterinformationen Steuerung an Dienstflüssen durchzuführen, die durch den Multiplexerpunkt laufen; wobei eine Kommunikationsschnittstelle zwischen den Betriebsmittelsteuereinheiten zum Durchführen eines Transfers von Informationen vorgesehen ist;
wobei jede der ersten Betriebsmittelsteuereinheit, zweiten Betriebsmittelsteuereinheit und dritten Betriebsmittelsteuereinheit ein Dienst-Steuerungsmodul, ein Betriebsmittelführungs-Steuerungsmodul, ein Fluss-Steuerungsmodul, ein Modul für erzwungenes reserviertes Betriebsmittel und ein Modul für erzwungenes gemeinsam genutztes Betriebsmittel umfasst;
wobei das Dienst-Steuerungsmodul des Edge-Dienstpunkts konfiguriert ist, eine IP-Adresse eines Anwenders sowie die Informationen der Dienststrategie und die Parameterinformationen der zugewiesenen für den Anwender maximal verfügbaren Betriebsmittel, wenn der Anwender eine Authentifizierung besteht, zu erhalten, die IP-Adresse des Anwenders, eine Außenlink-Identifizierung, die Dienststrategie und die Parameterinformationen der für den Anwender maximal verfügbaren Betriebsmittel zu binden; und die Dienststrategieinformationen zu dem Fluss-Steuerungsmodul des Edge-Dienstpunkts zu senden und die Parameterinformationen der maximal verfügbaren Betriebsmittel zu dem Betriebsmittelführungs-Steuerungsmodul des Edge-Dienstpunkts zu senden; wobei die Außenlink-Identifizierung als eine Anwender-ID in einer Link-Schicht verwendet wird, die durch den Edge-Dienstpunkt identifiziert werden kann;
das Betriebsmittelführungs-Steuerungsmodul des Edge-Dienstpunkts konfiguriert ist, Betriebsmittel des physikalischen Kanals für den Anwender in Übereinstimmung mit der Außenlink-Identifizierung zuzuweisen und das Modul für erzwungenes gemeinsam genutztes Betriebsmittel des Edge-Dienstpunkts zu informieren, um eine Parameterkonfiguration auszuführen;
das Modul für erzwungenes gemeinsam genutztes Betriebsmittel des Edge-Dienstpunkts dafür konfiguriert ist, Parameter gemeinsam genutzter Betriebsmittel in Übereinstimmung mit einem Ergebnis der Zuweisung eines gemeinsam genutzten Betriebsmittels, das von dem Betriebsmittelführungs-Steuerungsmodul des Edge-Dienstpunkts gesendet wird, zu konfigurieren und für das Fluss-Steuerungsmodul des Edge-Dienstpunkts die konfigurierten Parameter bereitzustellen.

2. Zugriffsnetzbetriebsmittel-Steuersystem nach Anspruch 1, wobei das Fluss-Steuerungsmodul des Edge-Dienstpunkts dafür ausgelegt ist, Dienststrategieinformationen, die von dem Dienst-Steuerungsmodul des Edge-Dienstpunkts gesendet werden, zu empfangen und eine Flussklassifizierung auszuführen; wobei das Fluss-Steuerungsmodul des Edge-Dienstpunkts ferner dafür ausgelegt ist, einen übertragenen Dienst in Übereinstimmung mit den erhaltenen Parameterkonfigurationsinformationen des Moduls für erzwungenes reserviertes Betriebsmittel und des Moduls für erzwungenes gemeinsam genutztes Betriebsmittel des Edge-Dienstpunkts zeitlich zu planen und zu steuern.

3. Zugriffsnetzbetriebsmittel-Steuersystem nach Anspruch 1, wobei die erste Betriebsmittelsteuereinheit ferner ein Topologieentdeckungsmodul und/oder ein Topologiekonfigurationsmodul umfasst, wobei
das Topologieentdeckungsmodul dafür ausgelegt ist, eine Kommunikationsadresse und Vorrichtungsinformationen einer Nachbarvorrichtung dynamisch zu entdecken und die Kommunikationsadresse und Vorrichtungsinformationen in einer lokalen Vorrichtung als Topologieinformationen zu sichern; und
das Topologiekonfigurationsmodul dafür ausgelegt ist, die Kommunikationsadresse und Vorrichtungsinformationen der Nachbarvorrichtung als die Topologieinformationen zu verwenden und die Kommunikationsadresse und Vorrichtungsinformationen in der lokalen Vorrichtung statisch zu sichern.

4. Verfahren zum Implementieren einer Zugriffsnetzbetriebsmittel-Steuerung, das Folgendes umfasst:
Bestimmen durch einen Edge-Dienstpunkt einer Dienststrategie und von Betriebsmittelnutzungsparameter-Informationen und Ausführen einer Betriebsmittelsteuerung an dem Edge-Dienstpunkt ESP;
Bestimmen durch den Edge-Dienstpunkt einer Zugriffspunktvorrichtung in einem Pfad, der von einem Dienst in Übereinstimmung mit den Informationen durchlaufen wird, und Senden der Informationen zu der Zugriffspunktvorrichtung; und
Ausführen durch die Zugriffspunktvorrichtung einer Zugriffsnetzbetriebsmittel-Steuerung in Übereinstimmung mit den Dienststrategie- und Betriebsmittelnutzungsparameter-Informationen; **dadurch gekennzeichnet, dass** der Edge-Dienstpunkt ein Dienst-Steuerungsmodul, ein Betriebsmittelführungs-Steuerungsmodul, ein Fluss-Steuerungsmodul, ein Modul für erzwungenes reserviertes Betriebsmittel und ein Modul für erzwungenes gemeinsam genutztes Betriebsmittel umfasst;
wobei der Prozess des Bestimmens einer Dienststrategie und von Betriebsmittelnutzungsparameter-Informationen durch den Edge-Dienstpunkt und des Ausführens einer Betriebsmittelsteuerung an dem Edge-Dienstpunkt Folgendes umfasst:
Erhalten durch das Dienst-Steuerungsmodul einer IP-Adresse eines Anwenders sowie der Informationen der Dienststrategie und der Parameterinformationen der für den Anwender verfügbaren maximalen zugewiesenen Betriebsmittel, wenn der Anwender die Authentifizierung besteht, Binden der IP-Adresse des Anwenders, einer Außenlink-Identifizierung, der Dienststrategie und der Parameterinformationen der für den Anwender maximal verfügbaren Betriebsmittel; und Senden der Dienststrategieinformationen zu dem Fluss-Steuerungsmodul und Senden der Parameterinformationen der maximal verfügbaren Betriebsmittel zu dem Betriebsmittelführungs-Steuerungsmodul; wobei die Außenlink-Identifizierung als eine Anwender-ID in einer Link-Schicht verwendet wird, die durch den Edge-Dienstpunkt identifiziert werden kann;
Zuweisen durch das Betriebsmittelführungs-Steuerungsmodul von Betriebsmitteln des physikalischen Kanals für den Anwender in Übereinstimmung mit der Außenlink-Identifizierung; und Informieren des Moduls für erzwungenes gemeinsam genutztes Betriebsmittel, um eine Parameterkonfiguration auszuführen;
wobei das Modul für erzwungenes gemeinsam genutztes Betriebsmittel dafür konfiguriert ist, Parameter gemeinsam genutzter Betriebsmittel in Übereinstimmung mit einem Ergebnis der Zuweisung eines gemeinsam genutzten Betriebsmittels, das von dem Betriebsmittelführungs-Steuerungsmodul gesendet wird, zu konfigurieren und für das Fluss-Steuerungsmodul die konfigurierten Parameter bereitzustellen.

5. Verfahren zum Implementieren einer Zugriffsnetzbetriebsmittel-Steuerung nach Anspruch 4, wobei in der Entwicklung eines Multicast-Diensts das Verfahren ferner Folgendes umfasst:
Ausführen einer statistischen Operation an der Anzahl der Anwender, die jeder Multicast-Gruppe beigetreten sind, wenn das Dienst-Steuerungsmodul des ESP einen Multicast-Kanal erzeugt, und Löschen des Multicast-Kanals, wenn die Anzahl der Anwender, die der Multicast-Gruppe beigetreten sind, gleich 0 ist; jedes Mal, wenn ein Anwender der Multicast-Gruppe beitritt, Informieren des Fluss-Steuerungsmoduls, um eine spezifische Flussklassifizierungsstrategie hinzuzufügen, um eine Paketkopie für eine Verbindung, die zu der Multicast-Gruppe hinzugefügt wird, auszuführen, und Kopieren des Pakets in einen entsprechenden Kanal; und optional Ausführen einer statistischen Operation an der Anzahl der Anwender, die der Multicast-Gruppe an einem Zugriffsnetzpunkt zwischen dem ESP und dem direkt mit einem Anwenderendgerät verbundenen Zugriffsnetzpunkt beigetreten sind.

6. Verfahren zum Implementieren einer Zugriffsnetzbetriebsmittel-Steuerung nach Anspruch 5, wobei vor dem Erzeugen des Multicast-Kanals für einen Multicast-Anwender durch den ESP das Verfahren ferner Folgendes umfasst:
gemeinsames Nutzen eines reservierten Kanals zwischen einer Multicast-Quelle und dem ESP, wenn verifiziert wird, dass der reservierte Kanal zwischen den einzelnen Zugriffsnetzpunkten des reservierten Kanals, der als ein Multicast-Kanal zwischen dem Anwender in der Multicast-Gruppe und dem ESP verwendet wird, gemeinsam genutzt werden kann, Erzeugen des reservierten Kanals zwischen dem Anwender und dem ESP und Konfigurieren des Fluss-Steuerungsmoduls, Daten des reservierten Kanals zwischen der Multicast-Quelle und dem ESP in den reservierten Kanal zwischen dem ESP und dem Anwender zu kopieren; oder
Erzeugen keines reservierten Kanals für den Anwender durch den ESP, sondern lediglich gemeinsames Nutzen des verfügbaren reservierten Kanals zwischen dem ESP und dem Zugriffsnetzpunkt, wenn verifiziert wird, dass der reservierte Kanal zwischen den einzelnen Zugriffsnetzpunkten des reservierten Kanals zwischen dem Anwender in der Multicast-Gruppe und dem ESP nicht gemeinsam genutzt werden kann; und währenddessen Informieren des Anwenders, den reservierten Kanal, der zwischen dem ESP und dem Zugriffsnetzpunkt verfügbar ist, über eine Schnittstelle des Zugriffsnetzpunkts, der direkt mit dem ESP verbunden ist, gemeinsam zu nutzen, bis der AP informiert wird.

7. Verfahren zum Implementieren einer Zugriffsnetzbetriebsmittel-Steuerung nach Anspruch 6, wobei der Prozess des Erzeugens des Multicast-Kanals für den Multicast-Dienst spezifisch Folgendes umfasst:
Informieren durch den Zugriffsnetzpunkt, der mit dem ESP verbunden ist, eines Zugriffsnetzpunkts einer nächsten niedrigeren Ebene, die mit dem Zugriffsnetzpunkt verbunden ist, der mit dem ESP verbunden ist, um den reservierten Kanal, der als der Multicast-Kanal verwendet wird, für ein Anwenderendgerät, das der Multicast-Gruppe beigetreten ist, zu erzeugen; anschließend Informieren eines Zugriffsnetzpunkts einer wiederum weiteren nächsten niedrigeren Ebene usw., bis ein Zugriffsnetzpunkt informiert wird, der direkt mit dem Anwenderendgerät verbunden ist; und anschließend Erzeugen durch den Zugriffsnetzpunkt, der direkt mit dem Anwenderendgerät verbunden ist, eines entsprechenden reservierten Kanals, Konfigurieren des Fluss-Steuerungsmoduls und Zurückleiten einer Nachricht über den Erfolg der Erzeugung eines reservierten Kanals und von Parameterinformationen;
Erzeugen durch einen Zugriffsnetzpunkt einer nächsten höheren Ebene des Zugriffsnetzpunkts, der direkt mit dem Anwenderendgerät verbunden ist, eines reservierten Kanals mit dem Zugriffsnetzpunkt der nächsten niedrigeren Ebene in Übereinstimmung mit dem zurückgeleiteten Parameter und Bestimmen durch den Zugriffsnetzpunkt, der direkt mit dem Anwenderendgerät verbunden ist, ob der reservierte Kanal zwischen dem lokalen Zugriffsnetzpunkt und dem Zugriffsnetzpunkt der nächsten höheren Ebene oder dem ESP erzeugt wird; falls der reservierte Kanal zwischen dem lokalen Zugriffsnetzpunkt und dem Zugriffsnetzpunkt der nächsten höheren Ebene oder dem ESP erzeugt wird, direktes Konfigurieren des Fluss-Steuerungsmoduls; andernfalls Erzeugen des entsprechenden reservierten Kanals und dann Konfigurieren des Fluss-Steuerungsmoduls.

8. Verfahren zum Implementieren einer Zugriffsnetzbetriebsmittel-Steuerung nach Anspruch 4, das ferner Folgendes umfasst:
Entdecken einer Kommunikationsadresse und von Vorrichtungsinformationen einer Nachbarvorrichtung auf dynamische Weise und Sichern der Kommunikationsadresse und der Vorrichtungsinformationen in der lokalen Vorrichtung als Topologieinformationen; und/oder
Konfigurieren der Kommunikationsadresse und der Vorrichtungsinformationen der Nachbarvorrichtung als die Topologieinformationen auf statische Weise und Sichern der Kommunikationsadresse und der Vorrichtungsinformationen in der lokalen Vorrichtung.

9. Verfahren zum Implementieren einer Zugriffsnetzbetriebsmittel-Steuerung nach Anspruch 8, wobei der Prozess des Entdeckens der Kommunikationsadresse und der Vorrichtungsinformationen der Nachbarvorrichtung auf dynamische Weise Folgendes umfasst:
Konfigurieren von Prioritätsinformationen in der Vorrichtung; Empfangen durch die Vorrichtung einer Entdeckungsnachricht, die von einer gegenüberliegenden Vorrichtung gesendet wird, und Senden einer Entdeckungsantwortnachricht in Übereinstimmung mit den Prioritätsinformationen, die in der Vorrichtung konfiguriert werden; und Bestimmen durch eine die Entdeckungsantwortnachricht empfangende Vorrichtung einer Aufwärtsstreckenvorrichtung der Vorrichtung, die die Entdeckungsantwortnachricht empfängt, in Übereinstimmung mit den Prioritätsinformationen; und
Registrieren von Aufwärtsstreckeninformationen und einer Kommunikationsadresse des Anwenders in der Aufwärtsstreckenvorrichtung, die bestimmt wird; Umsetzen durch die Aufwärtsstreckenvorrichtung der empfangenen Aufwärtsstreckeninformationen des Anwenders in entsprechende Abwärtsstreckeninformationen des Anwenders und Sichern der Abwärtsstreckeninformationen des Anwenders.

10. Verfahren zum Implementieren einer Zugriffsnetzbetriebsmittel-Steuerung nach Anspruch 9, wobei der Prozess des Registrierens der Aufwärtsstreckeninformationen und der Kommunikationsadresse des Anwenders in der Aufwärtsstreckenvorrichtung Folgendes umfasst:
in Bezug auf den Zugriffsnetzpunkt AP Melden der Aufwärtsstreckeninformationen der Vorrichtung, wo sich die Dienststeuerungsschnittstelle des AP in der Aufwärtsstreckenvorrichtung befindet; und
in Bezug auf den Multiplexer-Punkt MP, wenn eine Eins-zu-Eins-Korrelation zwischen den Aufwärtsstreckeninformationen und den Abwärtsstreckeninformationen der Abwärtsstreckenvorrichtung vorhanden ist, Melden nur der Aufwärtsstreckeninformationen, und wenn die Eins-zu-Eins-Korrelation zwischen den Aufwärtsstreckeninformationen und den Abwärtsstreckeninformationen der Abwärtsstreckenvorrichtung nicht gebildet werden kann, Registrieren der Aufwärtsstreckeninformationen und der Abwärtsstreckeninformationen der Abwärtsstreckenvorrichtung in der Aufwärtsstreckenvorrichtung des MP.

11. Verfahren zum Implementieren einer Zugriffsnetzbetriebsmittel-Steuerung nach Anspruch 9, wobei:
die Anwender-Aufwärtsstreckeninformationen Folgendes umfassen: Informationen, die auf den Anwender bezogen sind, der an der Schnittstelle, die mit der Aufwärtsstreckenvorrichtung verbunden ist, vorhanden ist, wobei die auf den Anwender bezogenen Informationen durch die Dienststeuerungsschnittstelle der lokalen Vorrichtung gemanagt werden; und
die Anwender-Abwärtsstreckeninformationen Folgendes umfassen: Informationen, die auf den Anwender bezogen sind, der an der Schnittstelle, die mit der Abwärtsstreckenvorrichtung verbunden ist, vorhanden ist, wobei die Informationen, die auf den Anwender bezogen sind, durch die Dienststeuerungsschnittstelle der lokalen Vorrichtung gemanagt werden.

12. Verfahren zum Implementieren einer Zugriffsnetzbetriebsmittel-Steuerung nach Anspruch 11, das ferner Folgendes umfasst:
wenn die Aufwärtsstreckenvorrichtung, in der die Abwärtsstreckenvorrichtung registriert ist, eine weitere Aufwärtsstreckenvorrichtung einer höheren Ebene besitzt, die mit der Aufwärtsstreckenvorrichtung verbunden ist, Bilden von Korrelationen zwischen den Anwender-Abwärtsstreckeninformationen und den Anwender-Aufwärtsstreckeninformationen sowie zwischen der Kommunikationsadresse der Abwärtsstreckenvorrichtung und der Kommunikationsadresse der lokalen Vorrichtung und Melden der entsprechenden Anwender-Aufwärtsstreckeninformationen und der Kommunikationsadresse der lokalen Vorrichtung an die weitere Aufwärtsstreckenvorrichtung der höheren Ebene.

13. Verfahren zum Implementieren einer Zugriffsnetzbetriebsmittel-Steuerung nach Anspruch 12, wobei die Korrelationen zwischen den Anwender-Abwärtsstreckeninformationen und den Anwender-Aufwärtsstreckeninformationen sowie zwischen der Kommunikationsadresse der Abwärtsstreckenvorrichtung und der Kommunikationsadresse der lokalen Vorrichtung durch einen Netzmanager im Voraus oder statisch konfiguriert werden oder in Übereinstimmung mit einer Link-Strategie der Vorrichtung dynamisch zugeordnet werden.

14. Verfahren zum Implementieren einer Zugriffsnetzbetriebsmittel-Steuerung nach Anspruch 9, wobei der dynamische Entdeckungsprozess ferner Folgendes umfasst:
Melden durch die lokale Vorrichtung der Anwender-Aufwärtsstreckeninformationen, die sich zu der Aufwärtsstreckenvorrichtung geändert haben, wenn eine neue Abwärtsstreckenvorrichtung beitritt oder wenn die Anwender-Abwärtsstreckeninformationen der Abwärtsstreckenvorrichtung geändert werden.

15. Vorrichtung zum Implementieren einer Zugriffsnetzbetriebsmittel-Steuerung nach Anspruch 14, das ferner das Detektieren, ob sich die Abwärtsstreckenvorrichtung geändert hat, umfasst, wobei das Verfahren spezifisch Folgendes umfasst:
wenn die Abwärtsstreckenvorrichtung die Aufwärtsstreckenvorrichtung entdeckt und sich in der Aufwärtsstreckenvorrichtung registriert, Senden durch die Abwärtsstreckenvorrichtung einer Wachhaltenachricht zu der Aufwärtsstreckenvorrichtung zu einer definierten Zeit oder periodisch; wenn die Aufwärtsstreckenvorrichtung die Wachhaltenachricht von der Abwärtsstreckenvorrichtung innerhalb einer im Voraus konfigurierten Zeitperiode nicht empfängt, Bestimmen, dass die Abwärtsstreckenvorrichtung nicht angeschlossen ist, und Ändern der Anwender-Abwärtsstreckeninformationen;
wobei das Verfahren alternativ ferner Folgendes umfasst: Senden durch die Aufwärtsstreckenvorrichtung der Wachhaltenachricht zu der Abwärtsstreckenvorrichtung zu einer definierten Zeit oder periodisch; und dann, wenn die Abwärtsstreckenvorrichtung die Wachhaltenachricht von der Aufwärtsstreckenvorrichtung innerhalb einer im Voraus konfigurierten Zeitperiode nicht empfängt, Bestimmen, dass die Aufwärtsstreckenvorrichtung nicht angeschlossen ist.

## Revendications

1. Système de commande de ressources de réseau d'accès, comprenant un point de service limitrophe, un point multiplexeur et un point d'accès, **caractérisé en ce que** :
le point de service limitrophe comprend une première unité de commande de ressources, configurée pour exécuter une commande des flux de service passant par le point de service limitrophe en fonction d'une politique de service et d'informations de paramètres d'utilisation des ressources ;
le point d'accès comprend une deuxième unité de commande de ressources, configurée pour exécuter une commande du flux de service passant par le point d'accès en fonction de la politique de service et des informations de paramètres d'utilisation des ressources ; et
le point multiplexeur comprend une troisième unité de commande de ressources, configurée pour exécuter une commande du flux de service passant par le point multiplexeur en fonction de la politique de service et des informations de paramètres d'utilisation des ressources ;
dans lequel une interface de communication est prévue entre les unités de commande de ressources pour exécuter un transfert d'informations ;
dans lequel chacune de la première unité de commande de ressources, de la deuxième unité de commande de ressources et de la troisième unité de commande de ressources comprend un module de commande de service, un module de commande d'inclusion de ressources, un module de commande de flux, un module de ressources réservées appliquées et un module de ressources partagées appliquées ;
dans lequel le module de commande de service du point de service limitrophe est configuré pour obtenir une adresse IP d'un utilisateur ainsi que les informations de la politique de service et les informations de paramètres des ressources maximum attribuées à la disposition de l'utilisateur quand l'utilisateur réussit l'authentification, lier l'adresse IP de l'utilisateur, une identification de liaison externe, la politique de service et les informations de paramètres des ressources maximum à la disposition de l'utilisateur ; et envoyer les informations de politique de service au module de commande de flux du point de service limitrophe et envoyer les informations de paramètres des ressources maximum disponibles au module de commande d'inclusion de ressources du point de service limitrophe ; dans lequel l'identification de liaison externe est utilisée comme ID d'utilisateur sur une couche de liaison qui peut être identifiée par le point de service limitrophe ;
le module de commande d'inclusion de ressources du point de service limitrophe est configuré pour attribuer des ressources du canal physique à l'utilisateur en fonction de l'identification de liaison externe, et informer le module de ressources partagées appliquées du point de service limitrophe qu'il convient d'effectuer une configuration paramétrique ;
le module de ressources partagées appliquées du point de service limitrophe est configuré pour configurer des paramètres des ressources partagées en fonction d'un résultat d'attribution de ressources partagées envoyé par le module de commande d'inclusion de ressources du point de service limitrophe, et fournir au module de commande de flux du point de service limitrophe les paramètres configurés.

2. Système de commande de ressources de réseau d'accès selon la revendication 1, dans lequel le module de commande de flux du point de service limitrophe est adapté pour recevoir des informations de politique de service envoyées par le module de commande de service du point de service limitrophe et exécuter une classification de flux ; en outre, le module de commande de flux du point de service limitrophe est adapté pour ordonnancer et commander un service transféré en fonction d'informations de configuration paramétrique obtenues du module de ressources réservées appliquées et du module de ressources partagées appliquées du point de service limitrophe.

3. Système de commande de ressources de réseau d'accès selon la revendication 1, dans lequel la première unité de commande de ressources comprend en outre un module de découverte de topologie et/ou un module de configuration de topologie, dans lequel :
le module de découverte de topologie est adapté pour découvrir dynamiquement une adresse de communication et des informations de dispositif d'un dispositif voisin, et sauvegarder l'adresse de communication et les informations de dispositif dans un dispositif local comme informations de topologie ; et
le module de configuration de topologie est adapté pour prendre l'adresse de communication et les informations de dispositif du dispositif voisin comme les informations de topologie, et sauvegarder statiquement l'adresse de communication et les informations de dispositif dans le dispositif local.

4. Procédé de mise en oeuvre d'une commande de ressources de réseau d'accès, comprenant :
la détermination, par un point de service limitrophe, d'une politique de service et d'informations de paramètres d'utilisation de ressources, et l'exécution d'une commande de ressources sur le point de service limitrophe, ESP ;
la détermination, par le point de service limitrophe, d'un dispositif de point d'accès dans un chemin traversé par un service en fonction des informations, et l'envoi des informations au dispositif de point d'accès ; et
l'exécution, par le dispositif de point d'accès, d'une commande de ressources de réseau d'accès en fonction de la politique de service et des informations de paramètres d'utilisation des ressources ; **caractérisé en ce que**
le point de service limitrophe comprend un module de commande de service, un module de commande d'inclusion de ressources, un module de commande de flux, un module de ressources réservées appliquées et un module de ressources partagées appliquées ;
dans lequel le processus de détermination d'une politique de service et d'informations de paramètres d'utilisation des ressources par le point de service limitrophe et d'exécution d'une commande de ressources sur le point de service limitrophe comprend :
l'obtention, par le module de commande de service, d'une adresse IP d'un utilisateur ainsi que des informations de la politique de service et des informations de paramètres des ressources maximum attribuées à la disposition de l'utilisateur quand l'utilisateur réussit l'authentification, la liaison de l'adresse IP de l'utilisateur, d'une identification de liaison externe, de la politique de service et des informations de paramètres des ressources maximum à la disposition de l'utilisateur ; et l'envoi des informations de politique de service au module de commande de flux et l'envoi des informations de paramètres des ressources maximum disponibles au module de commande d'inclusion de ressources ; dans lequel l'identification de liaison externe est utilisée comme ID d'utilisateur sur une couche de liaison qui peut être identifiée par le point de service limitrophe ;
l'attribution, par le module de commande d'inclusion de ressources, des ressources du canal physique à l'utilisateur en fonction de l'identification de liaison externe ; l'information au module de ressources partagées appliquées qu'il convient d'effectuer une configuration paramétrique ;
dans lequel le module de ressources partagées appliquées est configuré pour configurer des paramètres des ressources partagées en fonction d'un résultat d'attribution de ressources partagées envoyé par le module de commande d'inclusion de ressources, et fournir au module de commande de flux les paramètres configurés.

5. Procédé de mise en oeuvre d'une commande de ressources de réseau d'accès selon la revendication 4, comprenant en outre dans le développement d'un service de multidiffusion :
l'exécution d'une opération statistique sur le nombre d'utilisateurs participant à chaque groupe de multidiffusion quand le module de commande de service de l'ESP crée un canal de multidiffusion, et la suppression du canal de multidiffusion quand le nombre d'utilisateurs participant au groupe de multidiffusion est 0 ; chaque fois qu'un utilisateur participe au groupe de multidiffusion, l'information au module de commande de flux qu'il convient d'ajouter une politique de classification de flux spécifique pour exécuter une copie de paquet pour une connexion ajoutée au groupe de multidiffusion, et la copie du paquet sur un canal correspondant ; et
facultativement, l'exécution d'une opération statistique sur le nombre d'utilisateurs participant au groupe de multidiffusion sur un point de réseau d'accès entre l'ESP et le point de réseau d'accès directement connecté à un terminal utilisateur.

6. Procédé de mise en oeuvre d'une commande de ressources de réseau d'accès selon la revendication 5, comprenant en outre, avant la création du canal de multidiffusion pour un utilisateur de multidiffusion par l'ESP :
le partage d'un canal réservé entre une source de multidiffusion et l'ESP, quand il est vérifié que le canal réservé peut être partagé entre les points de réseau d'accès individuels du canal réservé, lequel est utilisé comme canal de multidiffusion, entre l'utilisateur dans le groupe de multidiffusion et l'ESP, la création du canal réservé entre l'utilisateur et l'ESP, et la configuration du module de commande de flux pour copier les données du canal réservé entre la source de multidiffusion et l'ESP sur le canal réservé entre l'ESP et l'utilisateur ; ou
la création d'aucun canal réservé pour l'utilisateur par l'ESP mais le partage uniquement du canal réservé disponible entre l'ESP et le point de réseau d'accès, quand il est vérifié que le canal réservé ne peut pas être partagé entre les points de réseau d'accès individuels du canal réservé entre l'utilisateur dans le groupe de multidiffusion et l'ESP ; et entre temps, l'information à l'utilisateur qu'il convient de partager le canal réservé disponible entre l'ESP et le point de réseau d'accès par l'intermédiaire d'une interface du point de réseau d'accès connecté directement à l'ESP, jusqu'à ce que l'AP soit informé.

7. Procédé de mise en oeuvre d'une commande de ressources de réseau d'accès selon la revendication 6, dans lequel le processus de création du canal de multidiffusion pour le service de multidiffusion comprend spécifiquement :
l'information, par le point de réseau d'accès connecté à l'ESP, à un point de réseau d'accès d'un niveau inférieur suivant qui est connecté au point de réseau d'accès connecté à l'ESP qu'il convient de créer le canal réservé, lequel est utilisé comme canal de multidiffusion, pour un terminal utilisateur participant au groupe de multidiffusion ; puis l'information à un point de réseau d'accès encore d'un niveau inférieur suivant, et ainsi de suite, jusqu'à ce qu'un point de réseau d'accès directement connecté au terminal utilisateur soit informé ; puis la création, par le point de réseau d'accès directement connecté au terminal utilisateur, d'un canal réservé correspondant, la configuration du module de commande de flux, et le renvoi d'un message de succès de création de canal réservé et d'informations de paramètres ;
la création, par un point de réseau d'accès d'un niveau supérieur suivant du point de réseau d'accès directement connecté au terminal utilisateur, d'un canal réservé avec le point de réseau d'accès du niveau inférieur suivant en fonction du paramètre renvoyé, et la détermination, par le point de réseau d'accès directement connecté au terminal utilisateur, que le canal réservé entre le point de réseau d'accès local et le point de réseau d'accès du niveau supérieur suivant ou l'ESP est créé ou non ; si le canal réservé entre le point de réseau d'accès local et le point de réseau d'accès du niveau supérieur suivant ou l'ESP est créé, la configuration directe du module de commande de flux ; dans le cas contraire, la création du canal réservé correspondant puis la configuration du module de commande de flux.

8. Procédé de mise en oeuvre d'une commande de ressources de réseau d'accès selon la revendication 4, comprenant en outre :
la découverte dynamique d'une adresse de communication et d'informations de dispositif d'un dispositif voisin, et la sauvegarde de l'adresse de communication et des informations de dispositif dans le dispositif local comme informations de topologie ; et/ou
la configuration statique de l'adresse de communication et des informations de dispositif du dispositif voisin comme informations de topologie, et la sauvegarde de l'adresse de communication et des informations de dispositif dans le dispositif local.

9. Procédé de mise en oeuvre d'une commande de ressources de réseau d'accès selon la revendication 8, dans lequel le processus de découverte dynamique de l'adresse de communication et des informations de dispositif du dispositif voisin comprend :
la configuration d'informations de priorité sur le dispositif ; la réception, par le dispositif, d'un message de découverte envoyé par un dispositif opposé, et l'envoi d'un message de réponse de découverte en fonction des informations de priorité configurées sur le dispositif ; et la détermination, par un dispositif recevant le message de réponse de découverte, d'un dispositif de liaison montante du dispositif recevant le message de réponse de découverte en fonction des informations de priorité ; et
l'enregistrement d'informations de liaison montante et d'une adresse de communication de l'utilisateur sur le dispositif de liaison montante qui est déterminé ; la conversion, par le dispositif de liaison montante, des informations de liaison montante reçues de l'utilisateur en informations de liaison descendante correspondantes de l'utilisateur, et la sauvegarde des informations de liaison descendante de l'utilisateur.

10. Procédé de mise en oeuvre d'une commande de ressources de réseau d'accès selon la revendication 9, dans lequel le processus d'enregistrement des informations de liaison montante et de l'adresse de communication de l'utilisateur sur le dispositif de liaison montante comprend :
relativement au point de réseau d'accès AP, la signalisation des informations de liaison montante du dispositif où est située l'interface de commande de service de l'AP sur le dispositif de liaison montante ; et
relativement au point multiplexeur MP, quand une corrélation bi-univoque existe entre les informations de liaison montante et les informations de liaison descendante du dispositif de liaison descendante, la signalisation uniquement des informations de liaison montante, et quand la corrélation bi-univoque ne peut pas être établie entre les informations de liaison montante et les informations de liaison descendante du dispositif de liaison descendante, l'enregistrement des informations de liaison montante et des informations de liaison descendante du dispositif de liaison descendante auprès du dispositif de liaison montante du MP.

11. Procédé de mise en oeuvre d'une commande de ressources de réseau d'accès selon la revendication 9, dans lequel :
les informations de liaison montante de l'utilisateur comprennent : des informations relatives à l'utilisateur qui existe sur l'interface connectée au dispositif de liaison montante, les informations relatives à l'utilisateur étant gérées par l'interface de commande de service du dispositif local ; et
les informations de liaison descendante de l'utilisateur comprennent : des informations relatives à l'utilisateur qui existe sur l'interface connectée au dispositif de liaison descendante, les informations relatives à l'utilisateur étant gérées par l'interface de commande de service du dispositif local.

12. Procédé de mise en oeuvre d'une commande de ressources de réseau d'accès selon la revendication 11, comprenant en outre :
quand le dispositif de liaison montante auprès duquel le dispositif de liaison descendante est enregistré a un autre dispositif de liaison montante d'un niveau supérieur connecté au dispositif de liaison montante, l'établissement de corrélations entre les informations de liaison descendante de l'utilisateur et les informations de liaison montante de l'utilisateur ainsi qu'entre l'adresse de communication du dispositif de liaison descendante et l'adresse de communication du dispositif local, et la signalisation des informations de liaison montante de l'utilisateur correspondantes et de l'adresse de communication du dispositif local à l'autre dispositif de liaison montante du niveau supérieur.

13. Procédé de mise en oeuvre d'une commande de ressources de réseau d'accès selon la revendication 12, dans lequel les corrélations entre les informations de liaison descendante de l'utilisateur et les informations de liaison montante de l'utilisateur ainsi qu'entre l'adresse de communication du dispositif de liaison descendante et l'adresse de communication du dispositif local sont préconfigurées par un gestionnaire de réseau, ou sont configurées statiquement, ou sont associées dynamiquement en fonction d'une politique de liaison du dispositif.

14. Procédé de mise en oeuvre d'une commande de ressources de réseau d'accès selon la revendication 9, dans lequel le processus de découverte dynamique comprend en outre :
la signalisation, par le dispositif local, au dispositif de liaison montante des informations de liaison montante de l'utilisateur qui ont changé, quand un nouveau dispositif de liaison descendante participe ou quand les informations de liaison descendante de l'utilisateur du dispositif de liaison descendante changent.

15. Procédé de mise en oeuvre d'une commande de ressources de réseau d'accès selon la revendication 14, comprenant en outre la détection que le dispositif de liaison descendante a changé ou non, le procédé comprenant spécifiquement :
quand le dispositif de liaison descendante découvre le dispositif de liaison montante et s'enregistre auprès du dispositif de liaison montante, l'envoi par le dispositif de liaison descendante, d'un message de maintien d'activité au dispositif de liaison montante à un temps défini ou périodiquement ; quand le dispositif de liaison montante ne reçoit pas le message de maintien d'activité depuis le dispositif de liaison descendante dans une période de temps préconfigurée, la détermination que le dispositif de liaison descendante est hors ligne, et le changement des informations de liaison descendante de l'utilisateur ;
en variante, le procédé comprend en outre : l'envoi, par le dispositif de liaison montante, du message de maintien d'activité au dispositif de liaison descendante à un temps défini ou périodiquement ; quand le dispositif de liaison descendante ne reçoit pas le message de maintien d'activité depuis le dispositif de liaison montante dans une période de temps préconfigurée, la détermination que le dispositif de liaison montante est hors ligne.
